# EUROPEAN PATENT SPECIFICATION

(11) **EP 1 276 554 B1**
(45) Date of publication and mention of the grant of the patent: **16.06.2004**
(21) Application number: 01969030.4
(22) Date of filing: 09.04.2001
(51) Int. Cl.: B01J 13/16

(54) **Water or oil soluble pesticidal formulation**
Wasser- oder öllösliche pestizide Formulierung
Formulation pesticide soluble dans l'eau ou dans une huile

(30) Priority: 19.04.2000 GB 0009735
(43) Date of publication of application: 22.01.2003
(73) Proprietor: Syngenta Limited, Guildford Surrey GU2 7YH (GB)
(72) Inventor: RODHAM, David Kirkham, Bracknell, Berkshire RG42 6EY (GB); RAMSAY, Guy, Bracknell, Berkshire RG42 6EY (GB); BROWN, David Joseph, Bracknell, Berkshire RG42 6EY (GB); TADROS, Tharwat Pouad, Bracknell, Berkshire RG42 6EY (GB)
(74) Representative: Ricks, Michael James
(86) International application number: PCT/GB2001/001613
(87) International publication number: WO 2001/078888

(56) References cited:
- US-A- 3 796 669
- US-A- 4 495 509
- US-A- 4 668 580
- US-A- 4 857 335
- US-A- 5 053 308

## Description

This invention relates to a formulation comprising water-soluble or oil-soluble pesticides.

Water-in-oil-in-water multiple emulsions are known and consist of a continuous aqueous phase having dispersed therein oil phase droplets wherein the oil phase droplets themselves each contain dispersed "inner" aqueous phase droplets. Hitherto such multiple emulsions have been of theoretical interest but have found only limited commercial applicability. In particular, water-in-oil-in-water multiple emulsions are often difficult to stabilise, especially where electrolytes are dissolved in either of the aqueous phases as these phases have to be osmotically balanced. Also known are encapsulated single emulsion formulations wherein the dispersed phase droplets are encapsulated within a polymer wall. Such encapsulated emulsions have wide commercial applicability, for example as slow-release formulations or to provide a polymer barrier to reduce physical contact between a user of the emulsion and the encapsulated material. In general encapsulated emulsions are formulated with an aqueous continuous phase and a dispersed encapsulated oil phase and for this reason are more suitable for oil-soluble active materials than water-soluble active materials.

US 5053308 A discloses a light-sensitive composition in which microcapsules having a core material comprising a silver halide emulsion are dispersed in a polymerisable compound. In one embodiment solvent extraction is used to precipitate the wall material in W/O/W double emulsion system.

A formulation according to the present invention is novel and provides advantages for the formulation of water-soluble or water dispersible active pesticides.

Thus according to the present invention there is provided a formulation comprising a continuous aqueous phase having dispersed therein oil phase droplets wherein each oil phase droplet contains an inner dispersion of aqueous phase droplets, a water-soluble or water-dispersible active material being dissolved or dispersed in the inner dispersion of aqueous phase droplets and at least one of (a) the inner dispersion of aqueous phase droplets and (b) the oil phase droplets being encapsulated within a polymer wall material, wherein the polymer wall material is the product of a reaction between two or more polymer precursor materials and wherein the active material is a water-soluble or oil-soluble pesticide.

According to a further aspect of the present invention there is provided a method of preparing a formulation comprising a continuous aqueous phase having dispersed therein oil phase droplets wherein each oil phase droplet contains an inner dispersion of aqueous phase droplets, a water-soluble or water-dispersible active material which is a water-soluble or oil-soluble pesticide being dissolved or dispersed in the inner dispersion of aqueous phase droplets and at least one of (a) the inner dispersion of aqueous phase droplets and (b) the oil phase droplets being encapsulated within a polymer wall material, which method comprises
i) forming a water-in-oil emulsion in which an aqueous solution or dispersion of the active material is emulsified in an oil phase containing a predominantly oil-soluble polymer precursor and emulsifying the water-in-oil emulsion into an aqueous phase containing a predominantly water-soluble polymer precursor such that interfacial polymerisation takes place to form a polymer wall encapsulating the dispersed oil droplets; or
ii) forming a water-in-oil emulsion in which an aqueous solution or dispersion of the active material is emulsified in an oil phase containing a first predominantly water-soluble polymer precursor, adding a predominantly oil-soluble polymer precursor whereby the polymer precursors undergo interfacial polymerisation to microencapsulate the dispersed aqueous droplets and thereafter emulsifying the resultant encapsulated water-in-oil emulsion into an aqueous phase; or
iii) forming a water-in-oil emulsion in which an aqueous solution or dispersion of the active material is emulsified in an oil phase containing a first predominantly water-soluble polymer precursor, adding a predominantly oil-soluble polymer precursor whereby the polymer precursors undergo interfacial polymerisation to microencapsulate the dispersed aqueous droplets and thereafter emulsifying the resultant encapsulated water-in-oil emulsion into an aqueous phase containing a second predominantly water-soluble polymer precursor, optionally with the addition of further oil-soluble polymer precursor, such that further interfacial polymerisation takes place to form a polymer wall encapsulating the dispersed oil droplets; or
iv) forming a water-in-oil-in-water emulsion comprising a continuous aqueous phase having dispersed therein oil phase droplets wherein each oil phase droplet contains an inner dispersion of aqueous phase droplets, a water-soluble or water-dispersible active material being dissolved or dispersed in the inner dispersion of aqueous phase droplets
wherein the oil phase contains a first oil-soluble polymer precursor and a second oil-soluble polymer precursor which together form a polymer material when heated in the presence of water and heating the emulsion to form a polymer at the oil-water interfaces.

The active material can reside in any or all of the three phases. It is to be further understood that the formulations according to the invention can comprise polymer capsule walls at either or both of the internal water/oil and external oil/water interfaces.

The present invention is primarily exemplified in the context of a water-soluble a water-soluble agrochemical or public health material, including without limitation herbicides, fungicides, insecticides and nematicides.

Water-in-oil-in-water multiple emulsions may be formed by a variety of techniques but it is generally convenient first to form a water-in-oil emulsion stabilised by a suitable surfactant system and then to emulsify the water-in-oil emulsion into a continuous aqueous phase using the same or preferably a different surfactant system. A wide variety of surfactants suitable for forming and stabilising such emulsions are commercially available and the emulsion may be formed by conventional low or high-shear mixers or homogenisation systems, depending on particle size requirements. Typical techniques for forming stable water-in-oil-in-water multiple emulsions are described for example in EP 0276911 A. The choice of surfactant, and in particular the surfactant used in the primary emulsion, is important in the establishment of stable interfaces. Polymeric surfactants are especially preferred for stabilising the primary, internal water-in-oil emulsion. Advantageously such polymeric surfactants may be capable of stabilising the internal phase both by their surface activity and by their ability to produce viscoelastic films at the water-oil interface.

Especially preferred polymeric surfactants used to form the initial water-in-oil emulsion include those described at column 5, line 26 to column 6, line 10 of US 4244816 A. As specific examples of suitable surfactants there may be mentioned:-
(a) An ABA block co-polymer of poly -12-hydroxystearic acid and polyethylene oxide. Such co-polymers are described in, for example, published GB 2002400 A. A copolymer of this kind is commercially available under the trade name ATLOX 4912(ATLOX is a trademark);
(b) The reaction product of polyisobutylenesuccinic anhydride (PIBSA) and ethanolamine, described in GB 2156799 A. A further example of a primary emulsifier is a related polymer which has been reacted with one mole of phosphoric acid to yield a monophosphate derivative (as described in Example 5 of GB 2156799 A).
(c) Other examples of suitable primary emulsifiers include the following: sorbitan monooleate (SPAN 80 - SPAN is a trademark), sorbitan trioleate (SPAN 85 ), mixtures of SPAN 80 with TWEEN 80 (sorbitan monolaurate condensed with 20 molar proportions of ethylene oxide - TWEEN is a trademark), TWEEN 85 (sorbitan trioleate condensed with 20 molar proportions of ethylene oxide), Lecitthin (phosphatidyl choline), SPAN 80/Lecithin mixtures, sorbitan sesquioleate (ARLACEL 83 - ARLACEL is a trademark) optionally mixed with lecithin, polyoxyethylene sorbitol hexa-oleate (G-1086) and polyethylene imines such as SOLSPERSE 17000 (SOLSPERSE is a trademark.

The surfactant used to disperse the water-in-oil emulsion into the aqueous phase to form the water-in-oil-in-water multiple emulsion, the secondary emulsifier, may selected from a broad list of emulsifiers capable of forming oil-in-water emulsions well known to those skilled in the art. Examples include:
a) condensates of alkyl (eg octyl, nonyl or polyaryl) phenols with ethylene oxide and optionally propylene oxide and anionic derivatives thereof such as the corresponding ether sulphates, ether carboxylates and phosphate esters;
   block copolymers of polyethylene oxide and polypropylene oxide such as the series of surfactants commercially available under the trademark PLURONIC (PLURONIC is a trademark of BASF);
b) TWEEN surfactants, a series of emulsifiers comprising a range of sorbitan esters condensed with various molar proportions of ethylene oxide;
c) condensates of C₈ to C₃₀ alkanols with from 2 to 80 molar proportions of ethylene oxide and optionally propylene oxide; and
d) polyvinyl alcohols, including the carboxylated and sulphonated products.

Mixtures of surfactants may be used to form either the primary or secondary emulsifier. If desired stability may additionally be increased by the formation of a gel within the oil phase or surrounding the oil phase droplets. The formation of a gel may for example be desirable to enhance the stability of a singly encapsulated multiple emulsion in which a polymer wall protects the inner aqueous phase droplets only. Suitable gelling agents will occur to those skilled in the art and a typical example is polymethacrylic acid in the presence of aluminium ion as described for example in EP 0276911 A. If desired an outer phase thickening agent may be used to increase the viscosity. A typical thickening agent is a polysaccharide. If the thickening agent is susceptible to biological depredation, a biocide may also be added. Protective colloids such as a lignosulphonate may be used in the outer phase and may also act as a secondary emulsifier.

It will be understood that the primary surfactant used to produce the precursor emulsions prior to encapsulation will also act to stabilise the internal water-in-oil droplets in the multiple emulsion. As has been noted above, previously known water-in-oil-in water multiple emulsions are often difficult to stabilise, especially where electrolytes are dissolved in either of the aqueous phases, as these phases have to be osmotically balanced. It is an advantage of the formulations of the present invention that the presence of polymer walls at the water/oil or oil/water interfaces generally improves stability such that the choice of surfactant becomes less critical and furthermore the need for balancing of osmotic pressure is reduced. It is to be understood however in some instances, for example if a high concentration of active ingredient which is an electrolyte is used in he inner aqueous phase, it may still be desirable to balance osmotic pressure to prevent rupture of the polymer walls. Osmotic pressure is conveniently balanced by the addition of a salt such as magnesium chloride to the outer aqueous phase. Where a salt is used to balance osmotic pressure, we have found that problems of flocculation previously encountered in such systems may be significantly reduced.

Many polymer precursors are known and one skilled in the art is able to select suitable polymer precursors and reaction conditions (such as the degree of cross-linking) to provide a polymer wall thickness and durability ranging from relatively transient polymer walls which can readily be disrupted to relatively durable polymer walls which provide slow release over a considerable period of time. Polymer precursors are also known which provide a polymer wall material which is degraded by external factors. Thus for example once an agrochemical formulation is diluted into water for application onto a target crop, the polymer wall material may be disrupted by the change in osmotic pressure within the encapsulated droplets or for example may be degraded under the action of sunlight.

One class of polymer precursors consists of a primarily oil-soluble component and a primarily water-soluble component which react together to undergo interfacial polymerisation at a water/oil interface. Typical of such precursors are an oil-soluble isocyanate such as toluene diisocyanate and a water-soluble amine such as diethylenetriamine to ensure crosslinking takes place. Cross linking variation may be achieved by increasing the functionality of the amine. Thus for example, cross-linking is increased if ethylene diamine for example is replaced by a polyfunctional amine such as DETA (Diethylene triamine), TEPA (Tetraethylene pentamine), AEP (Aminoethylpiperazine), and other well established cross linking amines. Isocyanate functionality can be altered (and thus cross-linking also altered) by moving from monomeric isocyanates such as toluene diisocyanate to PAPI (Poly(methylene) poly(phenyl) isocyanate). Mixtures of isocyanates, for example mixtures of toluene diisocyanate and PAPI, may also be used. Moreover, solubility can be altered by varying the chemistry from aromatic isocyanates to aliphatic isocyanates such as hexamethylenediisocyanate and isophorone diisocyanate. Further modifications can be achieved by partially reacting the isocyanate with a polyol to produce an amount of a polyurethane within the isocyanate chemistry to induce different properties to the wall chemistry. One skilled in the art will be aware of many other chemistries available for the production of a polymeric wall about an emulsion droplet. As well as the established isocyanate/amine reaction to produce a polyurea wall chemistry, there can be employed improvements to this technology including for example that in which hydrolysis of the isocyanate is allowed to occur to an amine which can then further react internally to produce the polyurea chemistry (as described for example in US 4285720 A). Variation in the degree of cross linking may be achieved by altering the ratio of monomeric isocyanate to polymeric isocyanate. As with the conventional isocyanate technology described above, any alternative isocyanates can be employed in this embodiment.

Other chemistries which may be employed in the present invention for the production of the polymer wall include polyurethane chemistry whereby an isocyanate is allowed to react with an alcohol (or polyol) to produce the polyurethane. Polyhydric alcohols such as glycerol, pentaerythritol, sugars can be employed as well as polyvinylalcohol. Mixtures of polyurea and polyurethane can be produced. Polyamides can be produced by reaction of an acid chloride with an amine or polyesters by reaction of an acid chloride with an alcohol, and again, mixtures of wall chemistries can be achieved. Newer aminoplast chemistries can also be employed in one aspect of this invention as described for example in US 4956129 A and US 5332584 A. Coacervate chemistries can also be employed to good effect for these formulations. Many techniques of producing a coacervate are known. Such techniques include gelatin/gum arabic systems and the synthetic ion pairing effects of polymeric anionic/cationic systems.

Thus in one embodiment of the present invention a water-in-oil emulsion is first formed wherein an aqueous solution of the desired active material is emulsified in an oil phase containing a predominantly oil-soluble polymer precursor such as toluene diisocyanate and thereafter the water-in-oil emulsion is itself emulsified into an aqueous phase containing a predominantly water-soluble polymer precursor such as diethylenetriamine such that interfacial polymerisation takes place to form a polymer wall encapsulating the dispersed oil droplets.

Thus according to a further aspect of the present invention there is provided a water-in-oil-in-water multiple emulsion comprising a continuous aqueous phase having dispersed therein oil phase droplets wherein each oil phase droplet contains an inner dispersion of aqueous phase droplets, a water-soluble active material being dissolved in the inner dispersion of aqueous phase droplets and the oil phase droplets being encapsulated within a polymer wall material formed by interfacial polymerisation of a predominantly water-soluble polymer precursor dissolved in the continuous aqueous phase and a predominantly oil-soluble polymer precursor dissolved in the oil phase droplets.

In a further embodiment of the present invention an encapsulated water-in-oil emulsion is first formed wherein an aqueous solution of the desired active material containing a first predominantly water-soluble polymer precursor such as diethylenetriamine is emulsified in an oil phase. After the emulsion has been formed, a predominantly oil-soluble polymer precursor such as toluene diisocyanate is added, whereby the polymer precursors undergo interfacial polymerisation to microencapsulate the dispersed aqueous droplets and thereafter the encapsulated water-in-oil emulsion is itself emulsified into an aqueous phase containing a second predominantly water-soluble polymer precursor such that interfacial polymerisation takes place to form a polymer wall encapsulating the dispersed oil droplets. The first predominantly water-soluble polymer precursor and the second predominantly water-soluble polymer precursor may be the same or different. Sufficient of the predominantly oil-soluble polymer precursor may be added in the first stage such that excess is present after the microencapsulation of the inner aqueous phase or alternatively additional predominantly oil-soluble polymer precursor may be added prior to the second stage in which microencapsulation of the oil phase droplets takes place.

Thus according to a further aspect of the present invention there is provided a water-in-oil-in-water multiple emulsion comprising a continuous aqueous phase having dispersed therein oil phase droplets wherein each oil phase droplet contains an inner dispersion of aqueous phase droplets, a water-soluble active material being dissolved in the inner dispersion of aqueous phase droplets, the inner aqueous phase droplets being encapsulated within a polymer wall material formed by interfacial polymerisation of a first predominantly water-soluble polymer precursor dissolved in the inner aqueous phase and a predominantly oil-soluble polymer precursor dissolved in the oil phase droplets and the oil phase droplets being encapsulated within a polymer wall material formed by interfacial polymerisation of a second predominantly water-soluble polymer precursor dissolved in the continuous aqueous phase and the predominantly oil-soluble polymer precursor dissolved in the oil phase droplets.

It is thus preferred that polymer wall material is the product of the reaction between an oil-soluble isocyanate and an water-soluble isocyanate-reactive polymer precursor wherein
i) the oil phase droplets are encapsulated within a polymer wall material formed by interfacial polymerisation of the oil-soluble isocyanate dissolved in the oil phase droplets and the isocyanate-reactive polymer precursor dissolved in the continuous aqueous phase or
ii) the inner aqueous phase droplets are encapsulated within a polymer wall material formed by interfacial polymerisation of a first isocyanate-reactive polymer precursor dissolved in the inner aqueous phase and the oil-soluble isocyanate dissolved in the oil phase droplets and the oil phase droplets are further encapsulated within a polymer wall material formed by interfacial polymerisation of a second isocyanate-reactive polymer precursor dissolved in the continuous aqueous phase and the oil-soluble isocyanate dissolved in the oil phase droplets.

Alternatively again, the encapsulated water-in-oil emulsion formed in the first stage of the above process may (ii) be dispersed in an aqueous phase without further microencapsulation to form a water-in-oil-in-water multiple emulsion comprising a continuous aqueous phase having dispersed therein oil phase droplets wherein each oil phase droplet contains an inner dispersion of aqueous phase droplets having a water-soluble active material dissolved therein wherein the inner water phase droplets are encapsulated within a polymer wall material formed by interfacial polymerisation of a predominantly water-soluble polymer precursor dissolved in the inner aqueous phase and the predominantly oil-soluble polymer precursor dissolved in the oil phase droplets.

Alternatively again, the encapsulated water in oil emulsion can be further diluted with suitable emulsifiers and solvents to give an encapsulated water-in-oil emulsion which on dilution with water forms a water-in-oil-in-water emulsion of the present invention.

A further class of polymer precursors consists of two precursor components which form a polymer material when heated. Typical of such a system is a polymer precursor which is an isocyanate such as toluene diisocyanate and a cross-linking material such as [polymethylene](polyphenylisocyanate) which initiates polymerisation on heating in the presence of water. Such heat-initiated precursors are typically both dissolved in the oil phase and form a polymer at the oil/water interface when heated. Thus the two precursor components may be dissolved in the oil phase of a water-in-oil-in-water multiple emulsion and heated, whereupon polymerisation will occur at both the interface of the oil droplets and the continuous aqueous phase and at the interface of the internal aqueous droplets dispersed within the oil droplets. The polymer wall thickness of the inner encapsulated aqueous droplets relative to that of the encapsulated oil droplets will depend on a number of factors including the relative interfacial surface areas. It will be appreciated that the use of heat-initiated polymerisation has the advantage of providing polymerisation at both interfaces in a single step but lacks the flexibility of a two stage process such as that described above in which the durability of the polymer wall encapsulating the inner aqueous droplets and that encapsulating the organic phase droplets may be independently controlled. Moreover, the need to work with emulsions which remain stable during the heating process places further constraints on this system and the reaction cannot be selectively controlled at each interface.

In one variation therefore both the inner aqueous phase droplets and the oil phase droplets are encapsulated within a polymer wall material which is the product of heating an oil-soluble isocyanate and an oil-soluble cross-linking agent in the presence of interfacial water. Preferably the oil-soluble isocyanate is toluene diisocyanate and the oil-soluble cross-linking agent is [polymethylene](polyphenylisocyanate).

A wide variety of materials suitable for use as the oil phase will occur to one skilled in the art. Examples include , diesel oil, isoparaffin , aromatic solvents, particularly alkyl substituted benzenes such as xylene or propyl benzene fractions, and mixed napthalene and alkyl napthalene fractions; mineral oils, white oil, castor oil, sunflower oil, kerosene, dialkyl amides of fatty acids, particularly the dimethyl amides of fatty acids such as caprylic acid; chlorinated aliphatic and aromatic hydrocarbons such as 1,1,1- trichloroethane and chlorobenzene, esters of glycol derivatives, such as the acetate of the n-butyl, ethyl, or methyl ether of diethylene glycol, the acetate of the methyl ether of dipropylene glycol, ketones such as isophorone and trimethylcyclohexanone (dihydroisophorone) and the acetate products such as hexyl, or heptyl acetate. The preferred organic liquids are xylene, diesel oil, isoparaffins and alkyl substituted benzenes.

It is also possible to use a liquid active ingredient as the oil phase without further dilution by solvent. As examples of suitable liquid active ingredients which may form the oil phase there may be mentioned a liquid ester of the herbicide 2,4-D and liquid esters of the herbicide fluazifop or fluazifop-P.

In some instances we have found that the rate of release of the active material may be significantly affected by the nature of the oil phase. Moreover, we have found that the oil phase can also exert an adjuvancy effect, increasing the bioefficacy of the active ingredient contained within the formulations. Suitable examples of oils that can exert an adjuvant effect as well as forming the oil phase in the water-in-oil emulsion include mineral oils, paraffin oils, diesel oils, vegetable oils and especially the esterified vegetable oils such as methyl oleate or methyl rapate.

The overall loading of the water-soluble active material, the phase volume of the inner aqueous phase and the phase volume of the water-in-oil emulsion in the continuous water phase may all be varied to suit the particular application under consideration. Examples in the agrochemical field are illustrated below.

In some instances, for example if the water-soluble active material is an electrolyte, osmotic pressure variation may develop as between the inner dispersed aqueous phase and the continuous aqueous phase as a result of diffusion of material through the polymer wall(s). If the water-in-oil-in-water multiple emulsion is designed to be diluted in water prior to use, any such effect will be exacerbated on dilution. In this case, it may be desirable to increase the electrolyte content of the continuous aqueous phase in order to balance the osmotic potential between the electrolytic water soluble active material in the inner dispersed aqueous phase and the electrolyte in the outer continuous aqueous phase. Many suitable water-soluble electrolytes will occur to one skilled in the art. Examples include inorganic salts such as magnesium chloride or its hydrates.

It will be appreciated that the present invention provides an inner dispersed aqueous phase containing the water-soluble active material and a distinct aqueous continuous phase separated therefrom by the polymer wall(s). It is possible therefore to include a second water-soluble active material in the continuous phase. Such second active material may be a material which is incompatible with the first material in aqueous solution, for example a second agrochemical or an agrochemical adjuvant which is incompatible with the active material contained in the inner aqueous dispersed phase. Alternatively, it may be desirable to include a second active material in the continuous aqueous phase to provide a rapid action which is subsequently followed by a slow-release effect of the encapsulated material in the inner dispersed aqueous phase. Indeed, it would be possible to have the same active material in both the continuous aqueous phase and the inner dispersed aqueous phase if it is desired to achieve both a rapid action and a sustained release effect.

It will be appreciated that it is possible to have an active ingredient or different active ingredients in all the three phases of the multiple emulsion (the internal aqueous phase, the middle oil phase and the external aqueous phase). As noted above, a liquid active ingredient may even itself form the oil phase or may be dissolved in the oil phase. Moreover, the active may be presented in solution (in either the oil or aqueous phases) or as a dispersion of solid material in any of the phases where different controlled release effects are desired.

The invention is particularly suitable for the manufacture of slow-release formulations of water-soluble herbicides such as fomesafen, glyphosate and more particularly for the presentation of the herbicide paraquat in a encapsulated water-in-oil-in-water multiple emulsion formulation which minimises physical contact between the user and the active material and which reduces the adverse effects of deliberate or accidental ingestion. As an example of a formulation where it is desired to provide for sequential treatment of a first agrochemical contained in the continuous aqueous phase followed by a second agrochemical whose released is delayed by the microencapsulation, there may be mentioned the treatment of plants with glyphosate and fomesafen. Mixtures of glyphosate and fomesafen are found to be antagonistic when formulated together whereas such antagonism may be substantially alleviated by formulation of glyphosate in the continuous aqueous phase and fomesafen in the encapsulated internal aqueous phase.

The pesticide can be introduced into any of the three phases depending on it's physical properties. If the pesticide has relatively low solubility in water, with a melting point above 55°C, it can be formulated as a dispersion of solid in water, which can be incorporated into either or both of the aqueous phases. The invention is particularly applicable to pesticides having a solubility in water of not more than 600ppm, more particularly not more than 150ppm, and most particularly not more than 50ppm. The invention is also particularly applicable to pesticides having a melting point of at least 55ºC, more particularly at least 77 ºC, and most particularly at least 100ºC.

Suitable fungicidal, herbicidal and insecticidal materials having a melting point of at least 55ºC and a solubility in water of not more than 600ppm are listed below. In the tables, the names and identifiers are taken from the Pesticide Manual, 11^{th} edition.

Suitable fungicidal materials having a melting point of at least 55ºC and a solubility in water of not more than 600ppm include the following:

| **Fungicides** | | |
|---|---|---|
| amitrole (<ph4.2) | azaconazole (<ph3) | azoxystrobin |
| benalaxyl | benomyl | bitertanol |
| bromocunazole | captafol | captan |
| carbendazim | carboxin | chinomethionate |
| chlorothalonil | chlozolinate | copper oxychloride |
| cuprous oxide | cyproconazole | cyprodinil |
| dichlofluanid | dichlorophen | diclomezine |
| dicloran | diethofencarb | difenoconazole |
| dimethomorph | diniconazole | dinobuton |
| dithianon | dodemorph | epoxiconazole |
| ethirimol | famoxadone | fenarimol |
| fenbuconazole | fenfuram | fenpiclonil |
| fentin | ferbam | ferimzone |
| fluazinam | fludioxonil | fluoroimide |
| fluquinconazole | flusulfamide | flutolanil |
| flutriafol | folpet | fuberidazole |
| furalaxyl | hexachlorobenzene | hexaconazole |
| imibenconazole | ipconazole | iprodione |
| kresoxim-methyl | ktu 3616 | mancozeb |
| maneb | Mepanipyrim | mepronil |
| mercuric oxide | Mercurous chloride | metconazole |
| methasulfocarb | Metiram | myclobutanil |
| nickel bis (dimethyldithiocarbamate) | Nitrothal-isopropyl | nurimol |
| ofurace | oxine-copper | penconazole |
| pencycuron | Pentachlorophenol | phthalide |
| probenazole | Promcymidone | propineb |
| pyributicarb | Pyrimethanil | quinoxyfen |
| quintozene | ssf-126 | sulphur |
| tebuconazole | Tecnazene | thiabendazole |
| thifluzamide | Thiophanate-methyl | thiram |
| tolclofos-methyl | Tolylfluanid | triadimefon |
| triadimenol | Triazoxide | triforine |
| triticonazole | Vinclozolin | zineb |
| ziram | | |

and strobilurin analogues i.e., a compound of the formula [1] 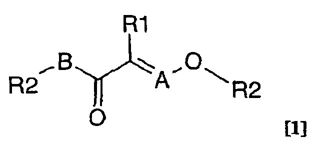 wherein R1 is an aromatic or hetcraromatic group,
R2 is H, or C₁-C₁₀ alkyl
A is CH or N and
B is O or NH.

Particularly suitable strobilurin analogues include kresoxime methyl of formula and azoxystrobin.

Suitable insecticidal (or acaricidal) materials having a melting point of at least 55ºC and a solubility in water of not more than 600ppm include the following:-

| **Insectides/acaricides** | | |
|---|---|---|
| Abamectin | Acrinathrin (i/a) | amitraz |
| | Azinphos-methyl | azocyclotin |
| Bensultap | Benzoximate (a) | bifenthrin (i/a) |
| Bromopropylate | Buprofezin | carbaryl |
| Carbofuran | Chinomethionat (a) | chlordane |
| chlorfenapyr (i/a) | Chlorfluazuron | clofentezine (a) |
| Coumaphos | Cryolite | cyfluthrin |
| beta-cyfluthrin | Cyhexatin (a) | cypermethrin |
| alpha-cypermethrin | beta-cypermethrin | theta-cypermethrin |
| d2341 (a) | Deltamethrin | diafenthiuron (i/a) |
| dicofol (a) | Dienochlor (a) | diflubenzuron |
| Dimethylvinphos | Dinobuton (a) | dpx-jw062/dpx-mp062 |
| Endosulfan (i/a) | Esfenvalerate | etoxazole (a) |
| Fenazaquin (i/a) | Fenbutatin oxide (a) | fenpyroximate (a) |
| fentin (a) | fipronil | flucycloxuron (i/a) |
| Flufenoxuron (i/a) | halofenozide | gamma-hch |
| Heptachlor | hexaflumuron | hexathiazox (a) |
| Hydromethylnon | isoprocarb | lufenuron (i/a) |
| Methiocarb (i/a) | methoxychlor | novaluron |
| Pentachlorophenol | phosmet | pymetrozine |
| Pyridaben | pyridaphenthion (i/a) | pyrimidifen (i/a) |
| Resmethrin | rh-2485 | rotenone |
| Spinosad | Sulfluramid | szi-121 (a) |
| Tebufenozide | tebufenpyrad (a) | Teflubenzuron |
| Tetrachlorvinphos | tetradifon (a) | Tetramethrin |
| Thiodicarb | tralomethrin | Triflumuron |
| Trimethacarb | xmc | Xylylcarb |
| (I = insecticideA = acaricide (miticide) | | |
| PGR = plant growth regulator) | | |

Suitable herbicidal materials having a melting point of at least 55ºC and a solubility in water of not more than 600ppm include the following:-

| **Herbicides** | | |
|---|---|---|
| ac 94,377 (pgr) | Aclonifen | akh-7088 |
| ametryn | Amidosulfuron | asulam (<ph4.82) |
| Atrazine | Azafenidin | azimsulfuron |
| bay foe 5043 | Benazolin | benfluaralin |
| bensulfuron-methyl | Bentazone | benzofenap |
| Bifenox | Biphenyl | bromobutide |
| bromofenoxim | Bromoxynil | butralin |
| butroxydim | Butylate | cafenstrole |
| chlomethoxyfen | Chlobomuron | chloridazon |
| chlorimurom-ethyl | Chlorotoluron | chlorsulfuron |
| chlorthal-dimethyl | Cinosulfuron | clodinaop-propargyl |
| clomeprop | Cloransulam-methyl | cyanzine |
| cyclanilide (pgr) | Cyclosulfamuron | 2,4-d acid |
| daimuron | 2,4-db | desmedipham |
| desmetryn | Diclobenil | dichlorprop |
| dichlorprop-p | Diclofop-methyl | diflufenican |
| dimefuron | Dimethmetryn | dinitramine |
| dinoterb | Diphenamid | dithiopyr |
| Diuron | Ethalfluralin | ethametsulfuron-methyl |
| ethofumesate | Ethoxysulfuron | ethychlozate (pgr) |
| etobenzanid | Fenozaprop-p-ethyl | flamprop-m-isopropyl |
| flamprop-m-methyl | Flumetralin (pgr) | flumetsulam |
| flumiclorac-pentyl | Fluometuron | fluoroglycofen-ethyl |
| flupoxam | Flupyrsulfuron-methyl-sodium | flurenol |
| fluridone | Flurochloridone | fluroxypyr |
| flurprimidol (pgr) | Flurtamone | fluthiacet-methyl |
| fomesafen | Forchlorfenuron (pgr) | halosulfuron-methyl |
| haloxyfop | Imazamox | imazaquin |
| imazosulfuron | Inabenfide (pgr) | indanofan |
| 4-indol-3-ylbutyric acid (pgr) | Ioxynil | isoproturon |
| Isouron | Isoxaben | isoxaflutole |
| Lenacil | Linuron | mcpa |
| Mcpb | Mecoprop | mefenacet |
| mcfluidide | Metazachlor | methabenzthiazuron |
| methasulfocarb (pgr) | Methyldymron | metobenzuron |
| metobromuron | Metosulam | metsulfuron-methyl |
| 2-(1-naphthyl)acetamide (pgr) | 2-(1-naphthyl)acetic acid (pgr) | (2-naphthoxy)aetic acid (pgr) |
| naproanilide | Napropamide | naptalm |
| neburon | Norflurazon | oryzalin |
| oxadiargyl | Oxadiazon | oxasulfuron |
| oxyfluorfen | Paclobutrazol (pgr) | pendimethalin |
| pentachlorophenol | Pentanochlor | pentoxazone |
| phenmedipham | n-phenylphthlamic acid | picloram |
| primisuluron-methyl | Prodiamine | prohexadione-calcium (pgr) |
| prometon | Prometryn | propachlor |
| propanil | Propaquizafop | propazine |
| propham | Propyzamide | prosulfuron |
| pyraflufen-ethyl | Pyrazolynate | pyrazosulfuron-ethyl |
| pyributicarb | Pyriminobac-methyl | quinclorac |
| quinmerac | Quizalofop | quizalofop-p |
| rimsulfuron | Siduron | simazine |
| simetryn | Sulcotrione | sulfentrazone |
| sulfometuron-methyl | Sulfosulfuron | terbumeton |
| terbuthylazine | Terbutryn | thenylchlor |
| thiazopyr | Thidiazuron (pgr) | thifensulfuron-methyl |
| tralkoxydim | Triasulfuron | tribenuron-methyl |
| triclopyr | Trietazine | trisulfuron-methyl |
| uniconazole | Florasulam | |

As water soluble pesticides, any pesticide that can be dissolved in water either alone or by derivatisation (such as by producing a salt by an appropriate neutralisation step) can be incorporated into either or both of the aqueous phases. These include paraquat (and its salts), diquat (and its salts), glyphosate as its water soluble salts, the auxin herbicides such as 2,4-D, clopyralid, MCPA, CMPP, triclopyr, fluroxypyr as their water soluble salts, the diphenyl ether herbicides exemplified by fomesafen as its water soluble salt, growth regulators such as chlormequat and mepiquat, fungicides such as dodine, guazatine, dodemorph, fenpropimorph and tridemorph as their water soluble salts.

Water soluble adjuvants such as urea, ammonium sulphate or other salts may also be incorporated into either or both of the aqueous phases. Likewise, water soluble surfactants may be incorporated into the aqueous phases.

Oil soluble pesticides may be incorporated into the oil phase of the multiple capsule. The pesticide should be soluble in the oil to a level appropriate for the desired formulation concentration. Clearly, this is variable dependent on both the pesticide and the oil chosen as solvent for the pesticide. Such selection is within the scope of one skilled in the art and the many pesticides suitable for dissolution in the oil phase can be identified in the Pesticide Manual, 11^{th} edition.

The present invention is particularly effective in providing an encapsulated water-in-oil-in-water multiple emulsion formulation of paraquat. In such a formulation, there is suitably up to 50% by weight paraquat salt (expressed as paraquat ion) in the internal aqueous phase, for example up to 35% by weight paraquat in the internal aqueous phase. The primary emulsion volume fraction (volume ratio of the internal aqueous phase in the dispersed organic phase) is suitably up to about 0.7, typically 0.65 and secondary emulsion volume (volume ratio of the total dispersed organic phase to the continuous aqueous phase) is suitably up to about 0.5, typically 0.45.

In a specific embodiment, it is known to include an emetic in paraquat compositions to reduce adverse effects in the event of accidental or deliberate ingestion. Compositions of the present invention wherein an emetic composition is contained in the continuous aqueous phase have the advantage that the emetic may take effect before significant exposure to the encapsulated paraquat contained within the internal aqueous phase has occurred.

The invention is illustrated by the following Examples in which all parts and percentages are by weight unless otherwise stated.

### EXAMPLE 1

### 1. Preparation of the primary emulsion

An aqueous solution of paraquat dichloride (54.02 Parts) containing 3.93parts of paraquat expressed as paraquat ion) was emulsified using a high shear mixer into 38.3 parts of xylene in the presence of 7.64 parts of ATLOX 4912 emulsifier to form a water-in-oil emulsion. ATLOX is a trademark of UniQema. ALTOX 4912 is a polyester-ether-polyester ABA block copolymer; the A groups are poly(12-hydroxystearic acid) and group B is a poly(ethylene oxide) chain.

### 2. Preparation of the water-in-oil-in-water multiple emulsion

To the water-in-oil emulsion prepared in stage 1 (5.7 parts) was added 0.61 parts of toluene diisocyanate (TDI). The monomer entered the organic phase. An aqueous solution was prepared containing 0.44 parts of diethylenetriamine (DETA), 0.018 parts sodium hydroxide, 0.19 parts sodium hydrogen carbonate, 2.9 parts sodium chloride in distilled water. This solution acts as a buffer for the system. The water-in-oil emulsion was emulsified into the outer aqueous phase using as a secondary emulsifier Gohshenol GL-05, Poly(vinyl alcohol), 94% min, mol wt 29,400, supplied by British Traders and Shippers. The proportions of components in the final water-in-oil-in-water multiple emulsion were as shown in Table 1.(Example 1).

A formulation according to the invention was formed and microscopic examination showed that the oil phase droplets were encapsulated within a polymer wall. No encapsulation of the innermost phase water droplets had taken place within the encapsulated oil phase droplets.

**TABLE 1**

| Overall proportions in the water-in-oil-in-water multiple emulsion shown as % w/w | | | | |
|---|---|---|---|---|
| Example No | 1 | 2 | 3 | 4 |
| Paraquat ion | 0.22 | 1.14 | 4.69 | 4.68. |
| ATLOX 4912 | 0.46 | 0.44 | 1.88 | 1.78 |
| Xylene | 5.2 | 5.1 | 12.85 | 8.93 |
| TDI | 0.61 | 0.61 | 0.61 | 1.41 |
| NaCl | 2.9 | 2.9 | 1.98 | - |
| GOHSENOL GL-05 | 0.75 | 0.75 | 0.45 | 1.14 |
| NaOH | 0.018 | 0.018 | 0.018 | - |
| NaHCO₃ | 0.19 | 0.19 | 0.19 | - |
| diethylenetriamine | 0.44 | 0.44 | 0.44 | 0.55 |
| Water | 89.2 | 88.4 | 62.81 | 66.2 |
| MgCl₂.6H₂O | - | - | 14.08 | 15.3 |

### EXAMPLE 2

The procedure of Example 1 was followed except that the proportions (% by weight) used in the primary emulsion were as follows:-

| | |
|---|---|
| Paraquat ion | 19.10 |
| ATLOX 4912 | 7.24 |
| Xylene | 36.4 |
| Water | 37.26 |

A formulation was prepared using the general method of Example 1 to give proportions of the components shown in Table 1.

### EXAMPLES 3 and 4

The general procedure of Example 1 was followed to form a formulation wherein the proportions of the components were as shown in Table 1. The proportions used in the primary emulsion were as in Example 2. However, in this example the concentration of paraquat ion was increased above 4% w/w and it was found necessary (in contrast with the formulation of Examples 1 and 2) to include magnesium chloride (as the hexahydrate) in the outer aqueous phase to balance the osmotic pressure of the paraquat dichloride in the inner aqueous phase.

### EXAMPLES 5, 6 and 7

This Example illustrates the formation of the polymer wall by the interaction of a mixture of PAPI (poly[methylene]poly[phenylisocyanate]) and toluene diisocyante with water. A primary emulsion was formed as in Example 2 using the proportions given below. The general procedure of Example 1 was followed with a mixture of PAPI and toluene diisocyante being added in place of toluene diisocyanate, except that after the formation of the water-in-oil-in-water emulsion the system was heated for 3 hours at 50°C with stirring during which time a cross-linked internal phase wall was formed by reaction of the isocyanate mixture dissolved in the oil phase with water from the outer aqueous phase. A formulation was formed in which the proportions were as indicated below. In Example 7 REAX M100 (sodium lignosulphonate) was used as surfactant in place of GOHSENOL GL-05.

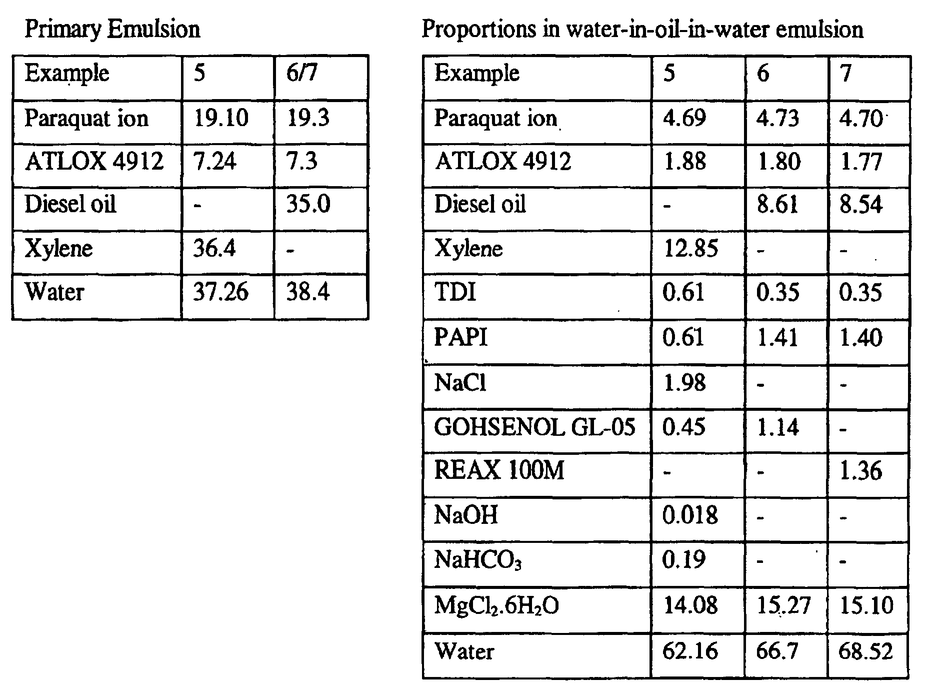

### EXAMPLES 8, 9 and 10

The general procedure of Example 1 was followed except that SYNPERONIC NPE 1800 (a nonylphenol:polypropylene oxide: polyethyleneoxide surfactant supplied by UniQema) was used as the secondary emulsifier in place of GOHENSOL GL-05. The proportions used in the initial water-in-oil emulsion and the resultant formulation were as indicated below. In Example 8 and 10 diesel oil was used and in Example 9 xylene.

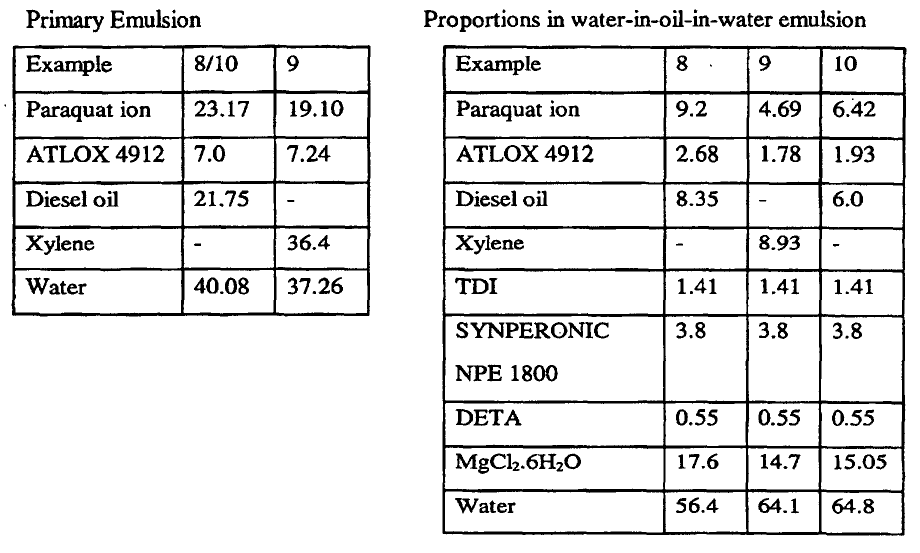

### EXAMPLES 11 and 12

This Example illustrates the formation of a formulation according to the invention in which the innermost aqueous phase and the intermediate oil phase are both encapsulated.

### Stage 1

An encapsulated water-in-oil emulsion was formed by the interaction of TDI and DETA. An aqueous solution of paraquat dichloride (71.06 parts) containing 23.16 parts of paraquat expressed as paraquat ion and also containing 0.1 parts of DETA was emulsified using a high shear mixer into 21.56 parts diesel oil containing 6.99 parts Atlox 4912 and 0.27 parts toluene diisocyanate to form an encapsulated water in oil emulsion. The resultant proportions were as follows:-

| | |
|---|---|
| Paraquat ion | 23.16 |
| ATLOX 4912 | 6.99 |
| Diesel oil | 21.56 |
| TDI | 0.27 |
| DETA | 0.1 |
| Water | 47.9 |

### Stage 2

To the encapsulated water in oil emulsion prepared in Stage 1 (43.16) was added 1.49 parts toluene diisocyanate. The monomer entered the organic phase. An aqueous solution was prepared, containing 3.95 parts SYNPERONIC NPE1800, 16.4 parts magnesium chloride hexahydrate, 0.05 parts Kelsan M (polysaccharide swelling agent used to thicken the outer aqueous phase), 0.05 parts Proxel GXL (biocide to protect the polysaccharide against biodegredation), and 56.6.parts water. The encapsulated water in oil emulsion was emulsified into the aqueous solution, using a high speed homogeniser, then DETA (0.58 parts) was added (Example 11).

The pH was measured and found to be 8.5 at laboratory temperature; which is slightly higher than is desirable having regard to the chemical stability of paraquat. Therefore 0.05 parts of acetic acid was added to a sub-sample to give a pH of 5.5 (Example 12). The proportions in the resultant polyencapsulated multiple emulsion were as follows:-

| Example | 11 | 12 |
|---|---|---|
| Paraquat ion | 9.25 | 9.25 |
| ATLOX 4912 | 2.79 | 2.79 |
| Diesel oil | 8.60 | 8.60 |
| TDI | 1.73 | 1.73 |
| SYNPERONIC NPE 1800 | 3.95 | 3.95 |
| DETA | 0.55 | 0.55 |
| MgCl₂.6H₂O | 16.4 | 16.4 |
| KELSAN M | 0.05 | 0.05 |
| PROXEL GXL | 0.05 | 0.05 |
| Acetic acid | - | 0.05 |
| Water | 56.50 | 56.45 |

### EXAMPLE 13

The following Example illustrates the use of fomesafen as active ingredient.

### Stage 1

Fomesafen acid (9.42 parts) was slurried in water (30.48 parts) and DETA (1.58 parts) was added to form a clear solution of DETA : fomesafen salt. This solution was then emulsified into diesel oil (52.25 parts) containing ATLOX 4912 (4.65 parts) and TDI (1.62 parts) to form an encapsulated water in oil emulsion.

### Stage 2

To the encapsulated w/o emulsion of fomesafen (Stage 1 above, 37.1 parts) was added 1.52 parts of toluene diisocyanate. The monomer entered the organic phase. An aqueous solution was prepared, containing 4.15 parts SYNPERONIC NPE 1800, 17.16 parts magnesium chloride hexahydrate, 0.05 parts PROXEL GXL, 0.05 parts KELSAN M, 0.59 parts DETA and 51.15 parts water. The encapsulated water in oil emulsion with the added TDI was then emulsified with a high speed mixer into the aqueous solution to give a doubly-encapsulated multiple emulsion. The proportions in the final emulsion were as follows:-

| | |
|---|---|
| Fomesafen acid | 3.49 |
| DETA | 0.81 |
| ATLOX 4912 | 1.72 |
| Toluene diisocyanate | 2.05 |
| Diesel oil | 19.39 |
| SYNPERONIC NPE1800 | 4.13 |
| Magnesium chloride hexahydrate | 17.16 |
| KELSAN M | 0.05 |
| PROXEL GXL | 0.05 |
| Water | 51.15 |

The water-in-oil emulsion of Stage 1 could alternatively be formed using the sodium salt of fomesafen. Thus for example fomesafen acid (21.08 parts) was slurried in distilled water (27.31 parts) and sodium hydroxide pellets (1.93 parts) were added. This results in a clear solution of fomesafen sodium salt. DETA (0.57 parts) and water (20 parts) were added to this solution and the solution was emulsified into diesel oil (20.7 parts) containing TDI (1.44 parts) and Atlox 4912 (6.97 parts) to form an encapsulated water in oil emulsion.

### EXAMPLE 14

Examples 14 and 15 illustrate the formation of a formulation where the innermost aqueous phase is not encapsulated but the intermediate oil phase is encapsulated.

### Stage 1

An aqueous solution of paraquat dichloride (70.3 parts) containing 22.05 parts of paraquat expressed as paraquat ion was emulsified using a high shear mixer into 23.76 parts solvesso 200 containing 7.7 parts Solsperse 17000 and 5 parts PAPI (poly[methylene] poly[phenylisocyanate]).
The resultant proportions were as follows:

| | |
|---|---|
| Paraquat ion | 22.05 |
| Solsperse 17000 | 7.7 |
| Solvesso 200 | 23.76 |
| PAPI | 5.0 |
| Water | 41.49 |

### Stage 2

An aqueous solution was prepared, containing Goshenol GL-03 (3.88 parts), Magnesium chloride (16.11 parts), Kelsan M (0.045 parts), Proxel GXL (0.045 parts) and water (56.2 parts). The water in oil emulsion containing PAPI from stage 1 was emulsified into this aqueous solution using a high speed mixer. The multiple emulsion thus formed was transformed into a formulation according to the invention (where only the intermediate oil droplet is encapsulated) by stirring and heating for three hours at 50°C to give a singly encapsulated multiple emulsion. The proportions in the final emulsion were as follows:

| | |
|---|---|
| Paraquat ion | 9.08 |
| Solsperse 17000 | 2.91 |
| Solvesso 200 | 9.78 |
| PAPI | 1.89 |
| Gohshenol GL-03 | 3.88 |
| Magnesium chloride hexahydrate | 16.11 |
| Kelsan M | 0.045 |
| Proxel GXL | 0.045 |
| Water | 56.2 |

### EXAMPLE 15

### Stage 1

The following composition was prepared in exactly the same way as for Stage 1 of Example 14, except the following proportions were used:

| | |
|---|---|
| Paraquat ion | 22.05 |
| Solsperse 17000 | 7.7 |
| Solvesso 200 | 21.76 |
| PAPI | 7.5 |
| Water | 40.99 |

### Stage 2

The following sample was prepared in exactly the same way as for Stage 2 of Example 14, except that the following proportions were used:

| | |
|---|---|
| Paraquat ion | 9.08 |
| Solsperse 17000 | 2.91 |
| Solvesso 200 | 8.96 |
| PAPI | 2.82 |
| Gohshenol GL-03 | 3.88 |
| Magnesium chloride hexahydrate | 16.11 |
| Kelsan M | 0.045 |
| Proxel GXL | 0.045 |
| Water | 56.15 |

## Claims

1. A formulation comprising a continuous aqueous phase having dispersed therein oil phase droplets wherein each oil phase droplet contains an inner dispersion of aqueous phase droplets, a water-soluble or water-dispersible active material being dissolved or dispersed in the inner dispersion of aqueous phase droplets and at least one of (a) the inner dispersion of aqueous phase droplets and (b) the oil phase droplets being encapsulated within a polymer wall material,
wherein the polymer wall material is the product of a reaction or interaction between two or more polymer precursor materials and wherein the active material is a water-soluble or oil-soluble pesticide.

2. A formulation according to claim 1 wherein polymer wall material is the product of the reaction between an oil-soluble isocyanate and an water-soluble isocyanate-reactive polymer precursor wherein
i) the oil phase droplets are encapsulated within a polymer wall material formed by interfacial polymerisation of the oil-soluble isocyanate dissolved in the oil phase droplets and the isocyanate-reactive polymer precursor dissolved in the continuous aqueous phase or
ii) the inner aqueous phase droplets are encapsulated within a polymer wall material formed by interfacial polymerisation of a first isocyanate-reactive polymer precursor dissolved in the inner aqueous phase and the oil-soluble isocyanate dissolved in the oil phase droplets and the oil phase droplets are further encapsulated within a polymer wall material formed by interfacial polymerisation of a second isocyanate-reactive polymer precursor dissolved in the continuous aqueous phase and the oil-soluble isocyanate dissolved in the oil phase droplets.

3. A formulation according to claim 2 wherein the oil-soluble isocyanate is toluene diisocyanate or poly(methylene) poly(phenyl) isocyanate and the water-soluble isocyanate-reactive polymer precursor is diethylenetriamine, aminoethylpiperazine or tetraethylene pentamine.

4. A formulation according to claim 1 wherein both the inner aqueous phase droplets and the oil phase droplets are encapsulated within a polymer wall material which is the product of heating an oil-soluble isocyanate and an oil-soluble cross-linking agent in the presence of interfacial water.

5. A water-in-oil-in-water multiple emulsion according to claim 4 wherein the oil-soluble isocyanate is toluene diisocyanate and the oil-soluble cross-linking agent is [polymethylene](polyphenylisocyanate).

6. An encapsulated water-in-oil-in-water emulsion according to any of the preceding claims wherein a water-soluble electrolyte is added to the continuous aqueous phase to balance the osmotic potential between the inner dispersed aqueous phase and the outer continuous aqueous phase.

7. A formulation according to any of the preceding claims wherein the active material is paraquat, diquat, glyphosate, 2,4-D, clopyralid, MCPA, CMPP, triclopyr, fluroxypyr as their water soluble salts, fornesafen and its water soluble salts , chlormequat, mepiquat, dodine, guazatine, dodemorph, fenpropimorph and tridemorph and where appropriate water soluble salts and mixtures thereof.

8. A formulation according to any of the preceding claims wherein a second water-soluble or water-dispersible active material is dissolved or dispersed in the continuous aqueous phase.

9. A formulation according to any of the preceding claims wherein the oil forming the oil phase is a mineral oil, paraffin oil, diesel oil, vegetable oil or an esterified vegetable oil.

10. A method of preparing a formulation comprising a continuous aqueous phase having dispersed therein oil phase droplets wherein each oil phase droplet contains an inner dispersion of aqueous phase droplets, a water-soluble or water-dispersible active material which is a water-soluble or oil-soluble pesticide being dissolved or dispersed in the inner dispersion of aqueous phase droplets and at least one of (a) the inner dispersion of aqueous phase droplets and (b) the oil phase droplets being encapsulated within a polymer wall material, which method comprises
i) forming a water-in-oil emulsion in which an aqueous solution or dispersion of the active material is emulsified in an oil phase containing a predominantly oil-soluble polymer precursor and emulsifying the water-in-oil emulsion into an aqueous phase containing a predominantly water-soluble polymer precursor such that interfacial polymerisation takes place to form a polymer wall encapsulating the dispersed oil droplets; or
ii) forming a water-in-oil emulsion in which an aqueous solution or dispersion of the active material is emulsified in an oil phase containing a first predominantly water-soluble polymer precursor, adding a predominantly oil-soluble polymer precursor whereby the polymer precursors undergo interfacial polymerisation to microencapsulate the dispersed aqueous droplets and thereafter emulsifying the resultant encapsulated water-in-oil emulsion into an aqueous phase; or
iii) forming a water-in-oil emulsion in which an aqueous solution or dispersion of the active material is emulsified in an oil phase containing a first predominantly water-soluble polymer precursor, adding a predominantly oil-soluble polymer precursor whereby the polymer precursors undergo interfacial polymerisation to microencapsulate the dispersed aqueous droplets and thereafter emulsifying the resultant encapsulated water-in-oil emulsion into an aqueous phase containing a second predominantly water-soluble polymer precursor, optionally with the addition of further oil-soluble polymer precursor, such that further interfacial polymerisation takes place to form a polymer wall encapsulating the dispersed oil droplets; or iv) forming a water-in-oil-in-water emulsion comprising a continuous aqueous phase having dispersed therein oil phase droplets wherein each oil phase droplet contains an inner dispersion of aqueous phase droplets, a water-soluble or water-dispersible active material being dissolved or dispersed in the inner dispersion of aqueous phase droplets wherein the oil phase contains a first oil-soluble polymer precursor and a second oil-soluble polymer precursor which together form a polymer material when heated in the presence of water and heating the emulsion to form a polymer at the oil-water interfaces.

11. A method according to claim 10 wherein the oil-soluble polymer precursor is an isocyanate.

12. A method according to any of claims 10 and 11 wherein a water-soluble electrolyte is added to the continuous aqueous phase to balance the osmotic potential between the inner dispersed aqueous phase and the outer continuous aqueous phase.

13. A method according to any of claims 10 to 12 wherein the active material is paraquat, diquat, glyphosate, 2,4-D, clopyralid, MCPA, CMPP, triclopyr, fluroxypyr as their water soluble salts, fomesafen and its water soluble salts , chlormequat, mepiquat, dodine, guazatine, dodemorph, fenpropimorph and tridemorph and where appropriate water soluble salts and mixtures thereof.

14. A method according to any of claims 10 to 13 wherein a second water-soluble or water-dispersible active material is dissolved or dispersed in the continuous aqueous phase.

15. A method according to any of claims 10 to 14 wherein the oil forming the oil phase is a mineral oil, paraffin oil, diesel oil, vegetable oil or an esterified vegetable oil.

16. A method according to any of claims 10 to 15 wherein the initial water-in-oil emulsion is formed in the presence of a first surfactant system and the water-in-oil emulsion thus formed is emulsified into a continuous aqueous phase using a second surfactant system.

## Revendications

1. Formulation comprenant une phase aqueuse continue dans laquelle sont dispersées des gouttelettes de phase buileuse, où chaque gouttelette de phase huileuse contient une dispersion interne de gouttelettes de phase aqueuse, une substance active soluble dans l'eau ou dispersable dans l'eau étant dissoute ou dispersée dans la dispersion interne de gouttelettes de phase aqueuse, et au moins l'une d'entre (a) la dispersion interne de gouttelettes de phase aqueuse et (b) les gouttelettes de phase huileuse étant encapsulée(s) dans un matériau de paroi polymère, où le matériau de paroi polymère est le produit d'une réaction ou d'une interaction entre deux ou plusieurs matériaux précurseurs de polymères, et où la substance active est un pesticide soluble dans l'eau ou soluble dans l'huile.

2. Formulation selon la revendication 1, dans laquelle le matériau de paroi polymère est le produit de la réaction entre un isocyanate soluble dans l'huile et d'un précurseur de polymère réactif avec les isocyanates soluble dans l'eau, et dans laquelle
i) les gouttelettes de phase huileuse sont encapsulées dans un matériau de paroi polymère formé par la polymérisation interfaciale de l'isocyanate soluble dans l'huile dissous dans les gouttelettes de phase huileuse et du précurseur de polymère réactif avec les isocyanates dissous dans la phase aqueuse continue, ou
ii) les gouttelettes de la phase aqueuse interne sont encapsulées dans un matériau de paroi polymère formé par la polymérisation interfaciale d'un premier précurseur de polymère réactif avec les isocyanates dissous dans la phase aqueuse interne et de l'isocyanate soluble dans l'huile dissous dans les gouttelettes de phase huileuse, et les gouttelettes de phase huileuse sont en outre encapsulées dans un matériau de paroi polymère formé par la polymérisation interfaciale d'un second précurseur de polymère réactif avec les isocyanates dissous dans la phase aqueuse continue et de l'isocyanate soluble dans l'huile dissous dans les gouttelettes de phase huileuse.

3. Formulation selon la revendication 2, dans laquelle l'isocyanate soluble dans l'huile est un diisocyanate de toluène ou un poly(méthylène)poly(phényl)-isocyanate et le précurseur de polymère réactif avec les isocyanates soluble dans l'eau est la diéthylènetnamine, l'aminoéthylpipérazine ou la tétraéthylènepentamine.

4. Formulation selon la revendication 1, dans laquelle les gouttelettes de phase aqueuse internes et les gouttelettes de phase huileuse sont toutes encapsulées dans un matériau de paroi polymère qui est le produit du chauffage d'un isocyanate soluble dans l'huile et d'un agent réticulant soluble dans l'huile en présence d'eau interfaciale.

5. Émulsion multiple de type eau dans l'huile dans l'eau selon la revendication 4, dans laquelle l'isocyanate soluble dans l'huile est un diisocyanate de toluène et l'agent réticulant soluble dans l'huile est un (polyméthylène)(polyphényl-isocyanate).

6. Émulsion de type eau dans l'huile dans l'eau encapsulée selon l'une quelconque des revendications précédentes, dans laquelle un électrolyte soluble dans l'eau est ajouté à la phase aqueuse continue pour équilibrer le potentiel osmotique entre la phase aqueuse dispersée interne et la phase aqueuse continue externe.

7. Formulation selon l'une quelconque des revendications précédentes, dans laquelle la substance active est le paraquat, le diquat, le glyphosate, le 2,4-D, le clopyralide, le MCPA, le CMPP, le triclopyr, le fluroxypyr sous forme de leurs sels solubles dans l'eau, le fomésafène et ses sels solubles dans l'eau, le chlorméquat, le mépiquat, la dodine, la guazatine, le dodémorph, le fenpropimorph et le tridémorph et, dans le cas approprié, leurs sels solubles dans l'eau et leurs mélanges.

8. Formulation selon l'une quelconque des revendications précédentes, dans laquelle une deuxième substance active soluble dans l'eau ou dispersable dans l'eau est dissoute ou dispersée dans la phase aqueuse continue.

9. Formulation selon l'une quelconque des revendications précédentes, dans laquelle l'huile formant la phase huileuse est une huile minérale, une huile de paraffine, du carburant diesel, une huile végétale ou une huile végétale estérifiée.

10. Procédé de préparation d'une formulation comprenant une phase aqueuse continue dans laquelle sont dispersées des gouttelettes de phase huileuse, où chaque gouttelette de phase huileuse contient une dispersion interne de gouttelettes de phase aqueuse, une substance active soluble dans l'eau ou dispersable dans l'eau, qui est un pesticide soluble dans l'eau ou soluble dans l'huile, étant dissoute ou dispersée dans la dispersion interne de gouttelettes de phase aqueuse, et au moins l'une d'entre
(a) la dispersion interne de gouttelettes de phase aqueuse et (b) les gouttelettes de phase huileuse étant encapsulée(s) dans un matériau de paroi polymère, le procédé comprenant:
i) la formation d'une émulsion de type eau dans l'huile dans laquelle une solution ou une dispersion aqueuse de la substance active est émulsionnée dans une phase huileuse contenant un précurseur de polymère principalement soluble dans l'huile et l'émulsionnement de l'émulsion de type eau dans l'huile dans une phase aqueuse contenant un précurseur de polymère principalement soluble dans l'eau de façon qu'une polymérisation interfaciale se produise pour former une paroi de polymère qui encapsule les gouttelettes d'huile dispersées; ou
ii) la formation d'une émulsion de type eau dans l'huile dans laquelle une solution ou une dispersion aqueuse de la substance active est émulsionnée dans une phase huileuse contenant un premier précurseur de polymère principalement soluble dans l'eau, l'addition d'un précurseur de polymère principalement soluble dans l'huile, grâce à quoi les précurseurs de polymères subissent une polymérisation interfaciale pour microencapsuler les gouttelettes aqueuses dispersées, puis l'émulsionnement de l'émulsion de type eau dans l'huile encapsulée obtenue dans une phase aqueuse; ou
iii) la formation d'une émulsion de type eau dans l'huile dans laquelle une solution ou une dispersion aqueuse de la substance active est émulsionnée dans une phase huileuse contenant un premier précurseur de polymère principalement soluble dans l'eau, l'addition d'un précurseur de polymère principalement soluble dans l'huile, grâce à quoi les précurseurs de polymères subissent une polymérisation interfaciale pour microencapsuler les gouttelettes aqueuses dispersées, puis l'émulsionnement de l'émulsion de type eau dans l'huile encapsulée obtenue dans une phase aqueuse contenant un deuxième précurseur de polymère principalement soluble dans l'eau, éventuellement avec l'addition de précurseur soluble dans l'huile supplémentaire, de façon qu'il se produise une nouvelle polymérisation interfaciale pour former une paroi de polymère encapsulant les gouttelettes d'huile dispersées; ou
iv) la formation d'une émulsion de type eau dans l'huile dans l'eau comprenant une phase aqueuse continue dans laquelle sont dispersées des gouttelettes de phase huileuse où chaque gouttelette de phase huileuse contient une dispersion interne de gouttelettes de phase aqueuse, une substance active soluble dans l'eau ou dispersable dans l'eau étant dissoute ou dispersée dans la dispersion interne de gouttelettes de phase aqueuse, et où la phase huileuse contient un premier précurseur de polymère soluble dans l'huile et un deuxième précurseur de polymère soluble dans l'huile qui forment ensemble un matériau polymère lorsqu'ils sont chauffés en présence d'eau, et le chauffage de l'émulsion pour former un polymère aux interfaces huile-eau.

11. Procédé selon la revendication 10, dans lequel le précurseur de polymère soluble dans l'huile est un isocyanate.

12. Procédé selon l'une quelconque des revendications 10 et 11, dans lequel on ajoute un électrolyte soluble dans l'eau à la phase aqueuse continue pour équilibrer le potentiel osmotique entre la phase aqueuse dispersée interne et la phase aqueuse continue externe.

13. Procédé selon l'une quelconque des revendications 10 à 12, dans lequel la substance active est le paraquat, le diquat, le glyphosate, le 2,4-D, le clopyralide, le MCPA, le CMPP, le triclopyr, le fluroxypyr sous forme de leurs sels solubles dans l'eau, le fomésafène et ses sels solubles dans l'eau, le chlorméquat, le mépiquat, la dodine, la guazatine, le dodémorph, le fenpropimorph et le tridémorph et, dans le cas approprié, leurs sels solubles dans l'eau et leurs mélanges.

14. Procédé selon l'une quelconque des revendications 10 à 13, dans lequel une deuxième substance active soluble dans l'eau ou dispersable dans l'eau est dissoute ou dispersée dans la phase aqueuse continue.

15. Procédé selon l'une quelconque des revendications 10 à 14, dans lequel l'huile formant la phase huileuse est une huile minérale, une huile de paraffine, du carburant diesel, une huile végétale ou une huile végétale estérifiée.

16. Procédé selon l'une quelconque des revendications 10 à 15, dans lequel on forme l'émulsion de type eau dans l'huile initiale en présence d'un premier système tensioactif et on émulsionne l'émulsion de type huile dans l'eau ainsi formée dans une phase aqueuse continue à l'aide d'un second système tensioactif.

## Patentansprüche

1. Formulierung, die eine kontinuierliche wäßrige Phase mit darin dispergierten Tröpfchen aus Ölphase umfaßt, worin jedes Tröpfchen aus Ölphase eine innere Dispersion von Tröpfchen aus wäßriger Phase enthält, wobei ein wasserlöslicher oder wasserdispergierbarer Wirkstoff in der inneren Dispersion von Tröpfchen aus wäßriger Phase gelöst oder dispergiert ist und wenigstens ein Vertreter aus (a) den inneren Dispersion von Tröpfchen aus wäßriger Phase und (b) der Tröpfchen aus Ölphase innerhalb eines Polymerwandmaterials verkapselt ist, worin das Polymerwandmaterial das Produkt einer Reaktion oder Wechselwirkung zwischen zwei oder mehr Polymervorläufermaterialien ist und worin der Wirkstoff ein wasserlösliches oder öllösliches Pestizid ist.

2. Formulierung gemäß Anspruch 1, worin das Polymerwandmaterial das Produkt der Reaktion zwischen einem öllöslichen Isocyanat und einem wasserlöslichen Isocyanat-reaktiven Polymervorläufer ist, worin
i) die Tröpfchen aus Ölphase innerhalb eines Polymerwandmaterials verkapselt sind, das durch Grenzflächenpolymerisation des in den Tröpfchen aus Ölphase gelösten öllöslichen Isocyanats und des in der kontinuierlichen wäßrigen Phase gelösten Isocyanat-reaktiven Polymervorläufers gebildet wird, oder
ii) die Tröpfchen aus innerer wäßriger Phase innerhalb eines Polymerwandmaterials verkapselt sind, das durch Grenzflächenpolymerisation eines in der inneren wäßrigen Phase gelösten, ersten Isocyanat-reaktiven Polymervorläufers und des in den Tröpfchen aus Ölphase gelösten öllöslichen Isocyanats gebildet wird, und die Tröpfchen aus Ölphase ferner innerhalb eines Polymerwandmaterials verkapselt sind, das durch Grenzflächenpolymerisation eines in der kontinuierlichen wäßrigen Phase gelösten, zweiten Isocyanat-reaktiven Polymervorläufers und des in den Tröpfchen aus Ölphase gelösten öllöslichen Isocyanats gebildet wird.

3. Formulierung gemäß Anspruch 2, worin das öllösliche Isocyanat Toluoldiisocyanat oder Poly(methylen)poly(phenyl)isocyanat ist und der wasserlösliche Isocyanat-reaktive Polymervorläufer Diethylentriamin, Aminoethylpiperazin oder Tetraethylenpentamin ist.

4. Formulierung gemäß Anspruch 1, worin sowohl die Tröpfchen aus innerer wäßriger Phase als auch die Tröpfchen aus Ölphase innerhalb eines Polymerwandmaterials verkapselt sind, das das Produkt des Erwärmens eines öllöslichen Isocyanats und eines öllöslichen Vernetzungsmittels in Gegenwart von Grenzflächenwasser ist.

5. Multiple Wasser-in-Öl-in-Wasser-Emulsion gemäß Anspruch 4, worin das öllösliche Isocyanat Toluoldiisocyanat ist und das öllösliche Vernetzungsmittel [Polymethylen](polyphenylisocyanat) ist.

6. Verkapselte Wasser-in-Öl-in-Wasser-Emulsion gemäß einem der vorhergehenden Ansprüche, worin ein wasserlöslicher Elektrolyt zur kontinuierlichen wäßrigen Phase hinzugegeben ist, um das osmotische Potential zwischen der inneren dispergierten wäßrigen Phase und der äußeren kontinuierlichen wäßrigen Phase auszugleichen.

7. Formulierung gemäß einem der vorhergehenden Ansprüche, worin der Wirkstoff Paraquat, Diquat, Glyphosat, 2,4-D, Clopyralid, MCPA, CMPP, Triclopyr, Fluroxypyr als ihre wasserlöslichen Salze, Fomesafen und seine wasserlöslichen Salze, Chlormequat, Mepiquat, Dodin, Guazatin, Dodemorph, Fenpropimorph und Tridemorph und, wie jeweils anwendbar, wasserlösliche Salze und Mischungen daraus ist.

8. Formulierung gemäß einem der vorhergehenden Ansprüche, worin ein zweiter wasserlöslicher oder wasserdispergierbarer Wirkstoff in der kontinuierlichen wäßrigen Phase gelöst oder dispergiert ist.

9. Formulierung gemäß einem der vorhergehenden Ansprüche, worin das die Ölphase bildende Öl ein Mineralöl, Paraffinöl, Dieselöl, Pflanzenöl oder ein verestertes Pflanzenöl ist.

10. Verfahren zur Herstellung einer Formulierung, die eine kontinuierliche wäßrige Phase mit darin dispergierten Tröpfchen aus Ölphase umfaßt, worin jedes Tröpfchen aus Ölphase eine innere Dispersion von Tröpfchen aus wäßriger Phase enthält, wobei ein wasserlöslicher oder wasserdispergierbarer Wirkstoff, der ein wasserlösliches oder öllösliches Pestizid ist, in der inneren Dispersion von Tröpfchen aus wäßriger Phase gelöst oder dispergiert ist und wenigstens ein Vertreter aus (a) der inneren Dispersion von Tröpfchen aus wäßriger Phase und (b) den Tröpfchen aus Ölphase innerhalb eines Polymerwandmaterials verkapselt ist, wobei das Verfahren umfaßt:
i) Bilden einer Wasser-in-Öl-Emulsion, in der eine wäßrige Lösung oder Dispersion des Wirkstoffs in einer Ölphase emulgiert ist, die einen hauptsächlich öllöslichen Polymervorläufer enthält, und Emulgieren der Wasser-in-Öl-Emulsion in einer wäßrigen Phase, die einen hauptsächlich wasserlöslichen Polymervorläufer enthält, so daß eine Grenzflächenpolymerisation unter Bildung einer Polymerwand stattfindet, die die dispergierten Öltröpfchen verkapselt; oder
ii) Bilden einer Wasser-in-Öl-Emulsion, in der eine wäßrige Lösung oder Dispersion des Wirkstoffs in einer Ölphase emulgiert ist, die einen ersten, überwiegend wasserlöslichen Polymervorläufer enthält, Zugeben eines überwiegend öllöslichen Polymervorläufers, wodurch die Polymervorläufer eine Grenzflächenpolymerisation unter Mikroverkapselung der dispergierten wäßrigen Tröpfchen erfahren, und danach Emulgieren der resultierenden verkapselten Wasser-in-Öl-Emulsion in einer wäßrigen Phase; oder
iii) Bilden einer Wasser-in-Öl-Emulsion, in der eine wäßrige Lösung oder Dispersion des Wirkstoffs in einer Ölphase emulgiert ist, die einen ersten, überwiegend wasserlöslichen Polymervorläufer enthält, Zugeben eines überwiegend öllöslichen Polymervorläufers, wodurch die Polymervorläufer eine Grenzflächenpolymerisation unter Mikroverkapselung der dispergierten wäßrigen Tröpfchen erfahren, und danach Emulgieren der resultierenden verkapselten Wasser-in-Öl-Emulsion in einer wäßrigen Phase, die einen zweiten, überwiegend wasserlöslichen Polymervorläufer enthält, gegebenenfalls unter Zugabe von weiterem öllöslichem Polymervorläufer, so daß eine weitere Grenzflächenpolymerisation unter Bildung einer Polymerwand stattfindet, die die dispergierten Öltröpfchen verkapselt; oder
iv) Bilden einer Wasser-in-Öl-in-Wasser-Emulsion, die eine kontinuierliche wäßrige Phase mit darin dispergierten Tröpfchen aus Ölphase umfaßt, worin jedes Tröpfchen aus Ölphase eine innere Dispersion von Tröpfchen aus wäßriger Phase enthält, wobei ein wasserlöslicher oder wasserdispergierbarer Wirkstoff in der inneren Dispersion von Tröpfchen aus wäßriger Phase gelöst oder dispergiert ist, worin die Ölphase einen ersten, öllöslichen Polymervorläufer und einen zweiten, öllöslichen Polymervorläufer enthält, die zusammen ein Polymermaterial bilden, wenn sie in Gegenwart von Wasser erwärmt werden, und Erwärmen der Emulsion zur Bildung eines Polymers an den Öl-Wasser-Grenzflächen.

11. Verfahren gemäß Anspruch 10, worin der öllösliche Polymervorläufer ein Isocyanat ist.

12. Verfahren gemäß einem der Ansprüche 10 und 11, worin ein wasserlöslicher Elektrolyt zur kontinuierlichen wäßrigen Phase hinzugegeben wird, um das osmotische Potential zwischen der inneren dispergierten wäßrigen Phase und der äußeren kontinuierlichen wäßrigen Phase auszugleichen.

13. Verfahren gemäß einem der Ansprüche 10 bis 12, worin der Wirkstoff Paraquat, Diquat, Glyphosat, 2,4-D, Clopyralid, MCPA, CMPP, Triclopyr, Fluroxypyr als ihre wasserlöslichen Salze, Fomesafen und seine wasserlöslichen Salze, Chlormequat, Mepiquat, Dodin, Guazatin, Dodemorph, Fenpropimorph und Tridemorph und, wie jeweils anwendbar, wasserlösliche Salze und Mischungen daraus ist.

14. Verfahren gemäß einem der Ansprüche 10 bis 13, worin ein zweiter, wasserlöslicher oder wasserdispergierbarer Wirkstoff in der kontinuierlichen wäßrigen Phase gelöst oder dispergiert ist.

15. Verfahren gemäß einem der Ansprüche 10 bis 14, worin das die Ölphase bildende Öl ein Mineralöl, Paraffinöl, Dieselöl, Pflanzenöl oder ein verestertes Pflanzenöl ist.

16. Verfahren gemäß einem der Ansprüche 10 bis 15, worin die anfängliche Wasser-in-Öl-Emulsion in Gegenwart eines ersten Tensidsystems gebildet wird und die so gebildete Wasser-in-Öl-Emulsion in einer kontinuierlichen wäßrigen Phase unter Verwendung eines zweiten Tensidsystems emulgiert wird.
